# FASCICULE DE BREVET EUROPEEN

(11) **EP 2 073 623 B1**
(45) Date de publication et mention de la délivrance du brevet: **19.06.2013**
(21) Numéro de dépôt: 07858532.0
(22) Date de dépôt: 08.10.2007
(51) Int. Cl.: A01D 41/12

(54) **DISPOSITIF DE RECUPERATION DE LA MENUE PAILLE SUR UNE MOISSONNEUSE BATTEUSE**
VERFAHREN ZUR RÜCKGEWINNUNG VON HÄCKSEL AN EINEM MÄHDRESCHER
DEVICE FOR RECOVERING CHAFF ON A COMBINE HARVESTER

(30) Priorité: 06.10.2006 FR 0654130
(43) Date de publication de la demande: 01.07.2009
(73) Titulaire: Bon, Alain, 08210 Euilly Et Lombut (FR)
(72) Inventeur: Bon, Alain, 08210 Euilly Et Lombut (FR)
(74) Mandataire: Rhein, Alain
(86) Numéro de dépôt international: PCT/FR2007/052101
(87) Numéro de publication internationale: WO 2008/040921

(56) Documents cités:
- WO-A-00/76294
- WO-A-03/051101
- FR-A- 1 055 341
- FR-A- 2 314 655
- GB-A- 918 355
- US-A- 3 370 728
- US-A- 3 580 257
- US-A- 3 938 683
- US-A- 4 100 720
- US-A- 4 236 530
- US-B1- 6 358 143

## Description

La présente invention a pour objet un dispositif de récupération de la menue paille sur une moissonneuse batteuse.

Une moissonneuse batteuse est destinée à la récolte des plantes à grain, principalement des céréales. Elle permet de réaliser en plus de la moisson, l'opération de battage qui consiste à séparer le grain de la paille.

Après cette opération de séparation, la paille est traitée pour en dissocier la menue paille qui comprend des débris de paille, les écorces de grains, et également des graines de mauvaises herbes comme par exemple les lupins et les pâturins.

Les moissonneuses batteuses sont généralement équipées d'un dispositif éparpilleur de menue paille, qui rejette celle-ci au sol. L'inconvénient d'un tel rejet est qu'il favorise la repousse de ces mauvaises herbes, lesquelles nécessitent pour être éliminées l'utilisation de produits désherbants.

On connaît également des moissonneuses conçues pour récolter le mélange de grain et de menue paille et pour rejeter au sol la paille, ledit mélange étant ensuite acheminé jusqu'à une machine indépendante pour y effectuer le battage permettant de séparer le grain de 1 la menue paille. Les machines nécessaires à la mise en oeuvre de ce procédé sont décrites dans le document WO 00/76294. Si ce procédé évite de rejeter la menue paille dans les champs, il n'en présente pas moins des inconvénients, notamment économiques, puisqu'il nécessite l'emploi de moyens de transports supplémentaires pour acheminer le mélange grain menue paille, et de la main d'oeuvre pus importante pour faire fonctionner simultanément les deux sites de traitement.

US-A-3370728 décrit un dispositif de collection de la menue paille accouplé à une moissonneuse batteuse.

La présente invention a pour but de remédier aux divers inconvénients précités en proposant un dispositif de récupération de la menue paille, permettant d'éviter le rejet de cette dernière et donc de limiter l'emploi de produits désherbants, tout en ne nécessitant pas de main d'oeuvre supplémentaire et eu limitant le développement de poussière.

Ce but est atteint par un dispositif conforme à la revendication 1.

Selon une autre caractéristique additionnelle du dispositif selon l'invention, les moyens de relevage débouchent dans le fond de la benne.

Selon une autre caractéristique additionnelle du dispositif selon l'invention, la benne est munie de moyens de basculement, elle est apte à basculer sur le châssis de la moissonneuse batteuse, et comprend une porte montée pivotante.

Les avantages et les caractéristiques du dispositif selon l'invention, ressortiront plus clairement de la description qui suit et qui se rapporte au dessin annexé, lequel en représente un mode de réalisation non limitatif.

Dans le dessin annexé :
- la figure 1 représente une vue schématique partielle en élévation d'un dispositif de récupération de la menue paille.
- la figure 2 représente une vue schématique en perspective du même dispositif.
- la figure 3 représente une vue schématique en coupe selon un plan vertical longitudinale du même dispositif.
- la figure 4 représente la même vue dans une configuration différente.

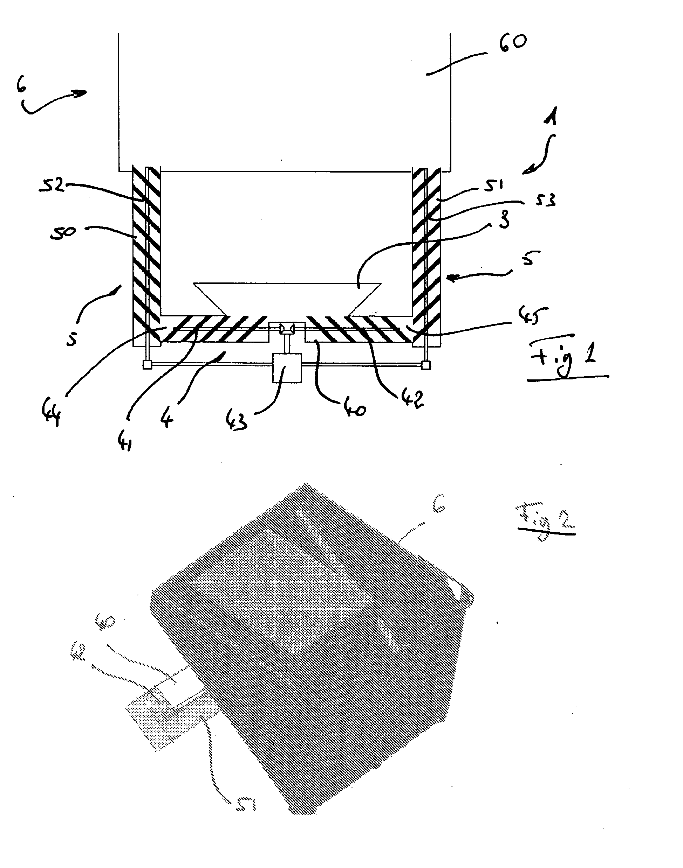

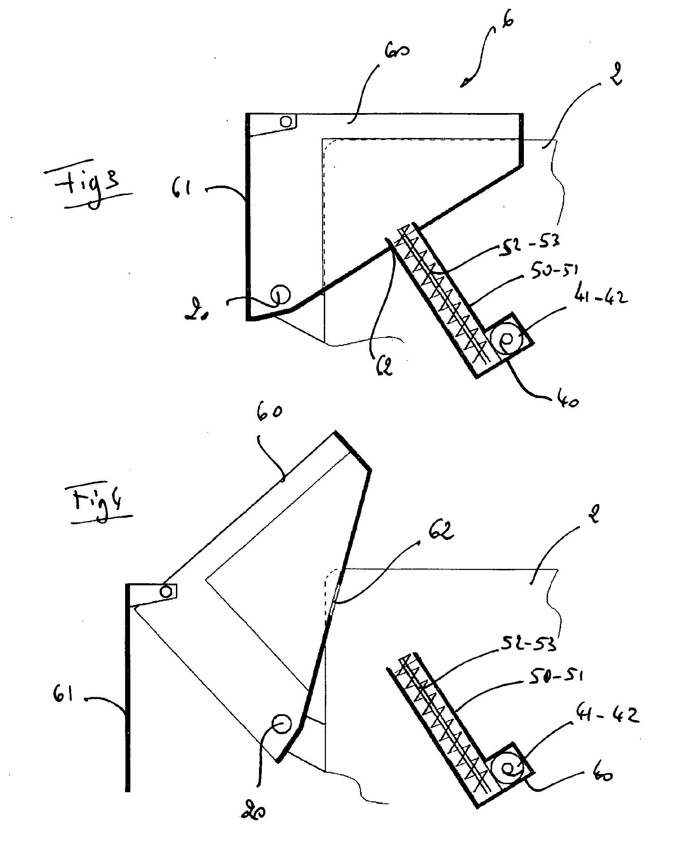

En référence à ces figures, on peut voir un dispositif 1 de récupération de la menue paille selon l'invention, lequel est destiné à être assujetti à une moissonneuse batteuse, dont n'est visible sur les figures 2 et 3 qu'une partie du châssis 2.

Ce dispositif 1 est destiné à être installé au niveau de la partie arrière de la moissonneuse batteuse, en aval des grilles, non représentées, de la batteuse après avoir déposé le dispositif éparpilleur de menue paille existant.

Le dispositif 1 comprend une trémie 3 de collecte de la menue paille, visible sur la figure 1, débouchant dans un moyen de transfert 4 qui coopère avec un moyen de relevage 5, lequel débouche dans un moyen de stockage 6.

Le moyen de transfert 4 se présente sous la forme d'un conduit 40 disposé transversalement par rapport à la moissonneuse batteuse, et qui incorpore deux vis sans fin 41 et 42 entraînées par un moyen moteur 43, et qui sont aptes à entraîner la menue paille déversée dans le conduit 40 via la trémie, vers les extrémités latérales 44 et 45 du conduit 40.

Chacune des extrémités 44 et 45 du conduit 40 débouche dans un conduit, respectivement 50 et 51, disposé obliquement et qui incorpore une vis sans fin, respectivement 52 et 53, mue également par le moyen moteur 43, l'ensemble constituant le moyen de relevage 5.

Les extrémités supérieures des conduits 50 et 51 débouchent diractement dans le moyen de stockage 6, en l'occurrence une benne 60 apte à basculer pour pouvoir être déchargée.

En pratique, la menue paille refoulée par la batteuse est déversée dans le conduit 40, où elle est repoussée vers les extrémités 44 et 45 par les vis 41 et 42, pour être prise en charge par les vis 52 et 53 dans les conduits 50 et 51, pour être acheminée jusque dans la benne 60.

Le remplissage de la benne 60 est réalisé par le bas en sorte de limiter la création de poussière.

On notera qu'il est prévu d'installer à chacune des extrémités 44 et 45 du conduit 40, entre les vis 41 et 52, et entre les vis 42 et 53, des moyens de coupe permettant, si nécessaire, de réduire la matière.

En référence plus précisément aux figures 3 et 4, on peut voir que la benne 60 est montée basculante sur un pivot 20 solidaire du châssis 2, et qu'elle est munie d'une porte pivotante 61 permettant son vidage.

Les conduits 50 et 51 sont solidaires fixement du châssis 2, et sont liés à la benne 60 uniquement en étant engagés dans des trous 62, dont un seul est visible sur les figures, pratiqués dans le fond de la benne 60, en sorte que lors du basculement de la benne 60 pour son vidage, les conduits 50 et 51 puissent en être désengagés.

En fonctionnement, la moissonneuse batteuse est utilisée de manière traditionnelle, les épis sont récoltés, et le grain est séparé de la paille. De plus, selon l'invention, la menue paille est stockée dans la benne 60, pour être après déchargée et stockée.

## Revendications

1. Dispositif de récupération de la menue paille sur une moissonneuse batteuse, destiné à être monté sur moissonneuse batteuse apte à réaliser la séparation du grain et de la paille et de la menue paille, et disposé en aval des grilles de la batteuse après enlèvement du dispositif éparpilleur de menue paille, comprenant des moyens de collecte (3, 4) de la menue paille, en remplacement dudit dispositif éparpilleur, lesquels moyens de collecte (3, 4) sont connectés à un moyen de relevage vertical (5) débouchant dans une benne (6, 60) disposée dans la partie supérieure de la moissonneuse batteuse, **caractérisé en ce que** ledit moyen de relevage vertical (5) consiste en au moins un conduit (50, 51) renfermant une vis sans fin (52, 53), et qui débouche dans le fond de ladite benne (60).

2. Dispositif de récupération selon la revendication 1, **caractérisé en ce que** les moyens de collecte consistent en une trémie (3) associée à moyen de transfert comprenant un conduit transversal (40) muni intérieurement d'au moins une vis sans fin (41, 42).

3. Dispositif de récupération selon l'une quelconque des revendications précédentes, **caractérisé en ce que** la benne (60) est munie de moyens de basculement (20), elle est apte à basculer sur le châssis (2) de la moissonneuse batteuse, et comprend une porte montée pivotante (61).

## Patentansprüche

1. Vorrichtung zur Rückgewinnung von Kurzstroh an einem Mähdrescher, vorgesehen, um an einem Mähdrescher montiert zu werden, die geeignet ist, um die Trennung des Korns von dem Stroh und Kurzstroh auszuführen, und die abwärts der Siebe der Dreschmaschine nach der Entfernung des Kurzstrohstreuers angeordnet ist, umfassend Mittel zum Sammeln (3, 4) des Kurzstrohs als Ersatz für den besagten Kurzstrohstreuer, welche Mittel zum Sammeln (3, 4) mit einem Steilaushebungsmittel (5) verbunden sind, das in einen Kübel (6, 60) führt, der sich in dem oberen Teil des Mähdrescher befindet, **dadurch gekennzeichnet, dass** das besagte Steilaushebungsmittel (5) aus zumindest einem Rohr (50, 51) besteht, das eine Schnecke (52, 53) einschließt und in den Boden des besagten Kübels (60) führt.

2. Rückgewinnungsvorrichtung nach Anspruch 1, **dadurch gekennzeichnet, dass** die Sammelmittel aus einem Trichter (3) bestehen, der einem Übertragungsmittel zugeordnet ist, das ein quer verlaufendes Rohr (40) umfasst, welches innerlich mit zumindest einer Schnecke (41, 42) ausgestattet ist.

3. Rückgewinnungsvorrichtung nach irgendeinem der vorgehenden Ansprüche, **dadurch gekennzeichnet, dass** der Kübel (60) mit Kippmitteln (20) ausgestattet ist, wobei er geeignet ist, um gegen den Rahmen (2) des Mähdreschers verschwenkt zu werden, und eine schwenkbar gelagerte Tür (61) umfasst.

## Claims

1. Device for recovering the chaff on a harvester-thresher, aimed at being mounted on a harvester-thresher capable of carrying out the separation of the grain from the straw and the chaff, and arranged downstream of the screens of the thresher after removal of the chaff spreader, comprising means for collecting (3, 4) the chaff as a substitution for said spreader, which means for collecting (3, 4) are connected to a vertical lifting means (5) ending into a bucket (6, 60) arranged in the upper portion of the harvester-thresher, wherein said vertical lifting means (5) is comprised of at least one duct (50, 51) enclosing a worm (52, 53) and ending onto the bottom of said bucket (60).

2. Recovering device according to claim 1, wherein the collecting means are comprised of a funnel (3) associated with a transfer means comprising a transversal duct (40) provided internally with at least one worm (41, 42).

3. Recovering device according to any of the preceding claims, wherein the bucket (60) is provided with tilting means (20), it is capable of tilting about the frame (2) of the harvester-thresher, and it comprises a pivotally mounted door (61).
